# EUROPEAN PATENT APPLICATION

(11) **EP 3 422 200 A1**
(43) Date of publication of application: **02.01.2019**
(21) Application number: 17209090.4
(22) Date of filing: 20.12.2017
(51) Int. Cl.: G06F 17/27, G06F 11/07, H04L 12/24

(54) **METHOD AND SYSTEM FOR HANDLING ONE OR MORE ISSUES IN A COMPUTING ENVIRONMENT**

(30) Priority: 30.06.2017 IN 201741023145
(71) Applicant: Wipro Limited, 560 035 Karnataka (IN)
(72) Inventor: VENKATARAMAN, Arthi, 560047 Bangalore (IN); ANANTHA, Ajay, 560032 Bangalore (IN)
(74) Representative: Finnegan Europe LLP

(57) **Abstract**

Disclosed herein is method and system for handling issues in a computing environment. An issue template is generated by mapping problem statements of the issues with system log information of the computing environment. Critical features in the issue templates are determined based on natural language analysis of the issue templates and predetermined parameters associated with the issues. Further, one or more clusters of issues are created based on semantic similarity analysis of the critical features, and finally, a correlation map of various clusters is created to dynamically identify issue resolution scripts required for handling the issues. The present method facilitates automated mapping of an issue to corresponding problem statements and action scripts, thereby eliminating manual intervention associated with classifying and handling of the issues in the computing environment.

## Description

### Field of the Invention

The present subject matter is related, in general, but not exclusively, to a method and system for handling one or more technical issues (such as errors and faults) that occur in a computing environment.

### Background

In any organization, various issues are raised in relation to various glitches across hardware and/or software assets of the organization. There are also specific issue resolution actions and scripts available for a specific asset-issue combination. For completely automating an issue resolution process, it is very necessary to group problem statements of issues, and then automatically map these problem statements with corresponding action scripts.

However, due to the diversity of issues reported, the mapping of exact action scripts to each of the different problem statements is a manual, time consuming activity. Also, the manual process of mapping the action scripts to the corresponding problem statements is a challenging task due to the distributed nature of knowledge across people involved in the issue resolution process, both in terms of expressing a problem and interpretation of a problem statement. Further, for handling a complex issue, the problem statements of the issues need to be broken down independently, and an association of the problem statements with corresponding solutions must be built. Also, to manually create a complete map of all the assets in the organization, their issues, and to provide resolutions is a very time-consuming activity. In addition, whenever new issues arise, the mapping process must be repeated.

### Summary

Disclosed herein is a method for handling one or more issues in a computing environment. The method comprises identifying, by an issue handling system, a problem statement associated with the one or more issues from one or more tickets. Upon identifying the problem statement, the method comprises extracting system log information related to the one or more issues from a system logger associated with the computing environment. Further, one or more issue templates are generated by mapping the problem statement of each of the one or more issues with corresponding system log information. Furthermore, one or more critical features in each of the one or more issue templates are determined based on one or more Natural Language Processing (NLP) components and predetermined issue parameters. Upon determining the one or more critical features, one or more clusters of issues are created based on semantic similarity between the one or more critical features and a distance matrix associated with each of the one or more issues. Finally, a correlation map of each of the one or more clusters is created for handling the one or more issues.

Further, the present disclosure relates to an issue handling system for handling one or more issues in a computing environment. The issue handling system comprises a processor and a memory. The memory is communicatively coupled to the processor and stores processor-executable instructions, which, on execution, causes the processor to identify a problem statement associated with the one or more issues from one or more tickets. Upon identifying the problem statement, the processor extracts system log information, related to the one or more issues, from a system logger associated with the computing environment. Further, the processor generates one or more issue templates by mapping the problem statement of each of the one or more issues with corresponding system log information. Furthermore, the processor determines one or more critical features in each of the one or more issue templates based on one or more Natural Language Processing (NLP) components and predetermined issue parameters. Upon determining the one or more critical features, the processor creates one or more clusters of issues based on semantic similarity between the one or more critical features and a distance matrix associated with each of the one or more issues. Finally, the processor creates a correlation map of each of the one or more clusters for handling the one or more issues.

Furthermore, the present disclosure relates to a non-transitory computer readable medium including instructions stored thereon that when processed by an issue handling system performs operations comprising identifying a problem statement associated with the one or more issues from one or more tickets. Further, system log information related to the one or more issues are extracted from a system logger associated with the computing environment. Upon extracting the system log information, one or more issue templates are generated by mapping the problem statement of each of the one or more issues with corresponding system log information. Later, the one or more critical features in each of the one or more issue templates are determined based on one or more Natural Language Processing (NLP) components and predetermined issue parameters for creating one or more clusters of issues based on semantic similarity between the one or more critical features and a distance matrix associated with each of the one or more issues. Finally, a correlation map of each of the one or more clusters is created for handling the one or more issues.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief Description of Drawings

The accompanying drawings, which are incorporated in and constitute a part of this disclosure, illustrate exemplary embodiments and, together with the description, explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and regarding the accompanying figures, in which:
**FIG. 1** shows an exemplary view of the computing environment having one or more issues to be handled in accordance with some embodiments of the present disclosure;
**FIG. 2** shows a detailed block diagram illustrating an issue handling system for handling one or more issues in a computing environment in accordance with some embodiments of the present disclosure;
**FIG. 3** shows a correlation map of clusters of one or more issues in accordance with some embodiments of the present disclosure;
**FIG. 4** shows a flowchart illustrating a method for handling one or more issues in a computing environment in accordance with some embodiments of the present disclosure; and
**FIG. 5** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether such computer or processor is explicitly shown.

### Detailed Description

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the specific forms disclosed, but on the contrary, the disclosure is to cover all modifications, equivalents, and alternative falling within the scope of the disclosure.

The terms "comprises", "comprising", "includes", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure relates to a method and an issue handling system for handling one or more issues in a computing environment. The method includes automatically mapping action scripts corresponding to the one or more issues with each of one or more problem statements related to the one or more issues. As an example, the action scripts may be set of instructions that are run in the computing environment while solving an issue raised. Action scripts can also be the scripts that are executed for solving an issue. Further, the method includes automatically updating the mapping between the action scripts and the one or more problem statements whenever a new issue arises in the computing environment. The present method is also capable of implementing the action scripts that are mapped for handling the one or more issues automatically, while considering the distributed nature of knowledge across different people involved in the issue resolution process, both in terms of expressing a problem and interpretation of its problem statement.

In an embodiment, the method further includes classifying the problem statements with a sophisticated Natural Language Processing (NLP) pipeline, which would help in building strong clusters of similar issues and associated problem statements based on their similarity. Also, the method uses system log information of the action scripts for clustering the same and/or similar set of problem statements, and to extract critical features of the one or more issues. Further, the issue handling system of the present disclosure may be configured to continuously learn and adapt to automatically map the newer issues and corresponding problem statements.

In an embodiment, the method and the issue handing system of the present disclosure facilitate automated mapping of an issue or its problem statement to an action script using natural language analysis of the one or more problem statements, action scripts and system log information. Establishing the automated mapping between the one or more issues, and their problem statements with the action scripts helps in eliminating manual intervention required for handling the one or more issues. Further, the issue handling system uses a virtual user interface to receive one or more problem statements from a user and to provide one or more issue resolution scripts corresponding to the one or more problem statements to the user. The issue resolution scripts are a set of instructions and actions that may be used for resolving the one or more issues.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

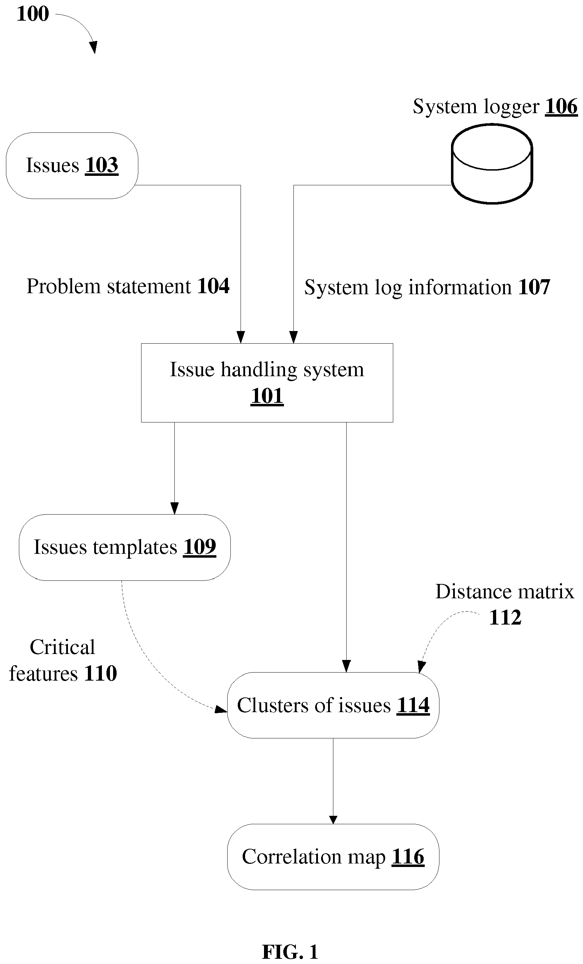

**FIG. 1** shows an exemplary view of a computing environment **100** having one or more issues **103** to be handled in accordance with some embodiments of the present disclosure.

The computing environment **100** includes an issue handling system **101,** and a system logger **106.** The issue handling system **101** may be configured to handle one or more issues **103** in the computing environment **100.** The one or more issues **103** may be associated with one or more assets and/or computing systems in the computing environment **100.** The assets may include hardware and/or software. As an example, the one or more issues **103** may include, without limiting to, network connectivity issues, data back-up issues, system lag issues, peripheral device connectivity issues, and the like.

In some embodiments, the one or more issues **103** in the computing environment **100** are notified and/or reported by the one or more assets in the form of one or more tickets. The one or more tickets corresponding to the one or more issues **103** may be retrieved from a ticketing system (not shown in FIG. 1) associated with the computing environment **100.** The ticketing system may be a computer software package that monitors and maintains a list of each of the one or more issues **103** in the computing environment **100.** Further, the one or more tickets may include various critical information related to each of the one or more issues **103** such as, identity of assets in which the one or more issues **103** have occurred, problem statements **104** of the one or more issues **103,** possible rectification actions for rectifying the one or more issues **103** and the like.

In some embodiments, the system logger **106** in the computing environment **100** may be associated with each of the one or more assets in the computing environment **100** to monitor and keep a track of various actions performed by each of the one or more assets, messages and data generated by each of the one or more assets, and status of each of the one or more assets in the form of system log information **107.** The system log information **107** may be continuously updated with respect to working instances of the one or more assets.

In some embodiments, the issue handling system **101** may generate one or more issue templates **109** by mapping the problem statements **104** associated with the one or more issues **103** and the system log information **107** related to the one or more issues **103.** As an example, the one or more issue templates **109** may indicate a one-to-one match among the one or more problem statements **104** identified in the computing environment **100** with respect to the system log information **107** related to the one or more assets. Therefore, the one or more assets responsible for the one or more issues **103** in the computing environment **100** may be determined based on the one or more issue templates **109.**

Further, the issue handling system **101** may determine one or more critical features **110** in each of the one or more issue templates **109** by applying one or more Natural Language Processing (NLP) techniques on the one or more issue templates **109** based on predetermined issue parameters. In some embodiments, the one or more critical features **110** may be in the form of keywords that highlight an intent of the one or more problem statements **104.** In case of receiving the one or more problem statements **104** from a user associated with the computing environment **100,** the one or more critical features **110** may be automatically determined by analyzing each of the one or more problem statements **104** using the NLP components based on the predetermined issue parameters. As an example, the predetermined issue parameters may include, without limiting to, semantic parameters, temporal parameters, spatial parameters, and contextual parameters related to each of the one or more issues **103.**

In some embodiments, upon determining the one or more critical features **110,** the issue handling system **101** may create one or more clusters of issues **114** based on semantic similarity between the one or more critical features **110** and a distance matrix **112** associated with each of the one or more issues **103.** Each of the one or more clusters may include one or more critical features **110** that are semantically related. In some implementations, the distance matrix **112** may indicate relevance of each of a first set of critical features relative to a second set of critical features, such that both the first set of critical features and the second set of critical features are a subset of the one or more critical features **110.**

Finally, the issue handling system **101** may create a correlation map **116** of each of the one or more clusters based on the correlation among each of the one or more clusters. Whenever there is a new issue in the computing environment **100,** the issue handling system **101** may determine the right cluster of issues to which the identified issue must belong, based on the correlation map **116.** Thus, the correlation map **116** helps in automatically classifying the one or more problem statements **104** associated with one or more issues **103** in the computing environment **100.**

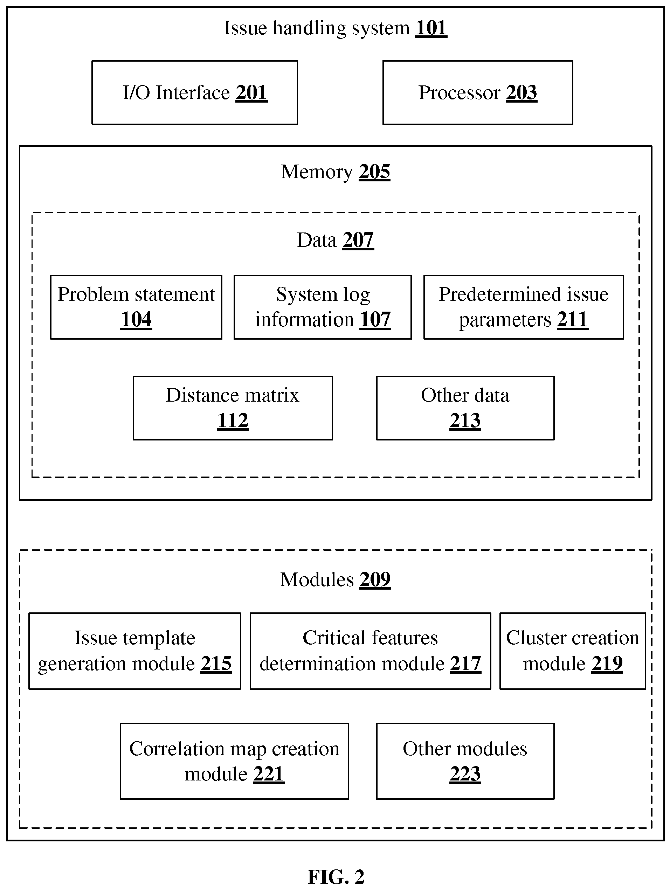

**FIG. 2** shows a detailed block diagram illustrating the issue handling system **101** for handling the one or more issues **103** in the computing environment **100** in accordance with some embodiments of the present disclosure.

The issue handling system **101** includes an I/O interface **201,** a processor **203,** and a memory **205.** The I/O interface **201** may be configured to receive one or more problem statements **104** associated with the one or more issues **103** from a user of the computing environment **100** through a user interface (not shown in FIG. 2) associated with the user. Also, the I/O interface **201** may be interfaced with the user interface for providing the correlation map to the user for handling the one or more issues **103.** The memory **205** may be communicatively coupled to the processor **203.** The processor **203** may be configured to perform one or more functions of the issue handling system **101** for handling the one or more issues **103** in the computing environment **100.**

In some implementations, the issue handling system **101** may include data **207** and modules **209** for performing various operations in accordance with the embodiments of the present disclosure. In an embodiment, the data **207** may be stored within the memory **205** and may include, without limiting to, one or more problem statements **104,** system log information **107,** predetermined issue parameters **211,** distance matrix **112** and other data **213.**

In some embodiments, the data **207** may be stored within the memory **205** in the form of various data structures. Additionally, the data **207** may be organized using data models, such as relational or hierarchical data models. The other data **213** may store data, including temporary data and temporary files, generated by the modules **209** for performing the various functions of the issue handling system **101.**

In an embodiment, the one or more problem statements **104** associated with the one or more issues **103** may be identified from the one or more tickets retrieved from the ticketing system associated with the computing environment **100.** Alternatively, the one or more problem statements **104** may be directly received from the user through the user interface. As an example, the problem statements **104** may be in the form of a sentence in natural language, which would clearly indicate nature of the one or more issues **103** in the computing environment **100.** Upon identifying, the one or more problem statements **104,** the issue handling system **101** may process each of the one or more problem statements **104** using the NLP components for extracting one or more key features from the one or more problem statements **104.** Subsequently, the extracted key features may be used for mapping the one or more problem statements **104** with the corresponding system log information **107.**

In an embodiment, the system log information **107** may be extracted from a system logger **106** in the computing environment **100.** In some implementations, the system logger **106** may be interfaced with each of the one or more assets in the computing environment **100** to monitor and keep a track of various actions performed by the one or more assets, messages and data generated by the one or more assets, and status of the one or more assets in the form of system log information **107.** The system log information **107** may be continuously updated with respect to working instances of the one or more assets. As an example, the system log information **107** may include, without limiting to, at least one of details related to one or more actions causing the one or more issues **103,** timestamp of one or more commands or action scripts run corresponding to the actions, state of one or more environmental variables during execution of the actions and the action scripts run in the computing environment **100.**

In some embodiments, upon identifying occurrence of any issue in the computing environment **100,** the issue handling system **101** may dynamically extract a most recent copy of the system log information **107** for classifying the issue by mapping the problem statements **104** of the issue with the appropriate system log information **107.**

In some embodiments, the predetermined issue parameters **211** may be used for determining the one or more critical features **110** in each of the one or more issue templates **109.** Initially, the issue handling system **101** may analyze the one or more issue templates **109** using the NLP components. Further, the one or more critical features **110** may be determined by segregating information in the one or more issue templates **109** based on the predetermined issue parameters **211.** As an example, the one or more predetermined issue parameters **211** may include, without limiting to, semantic parameters, temporal parameters, spatial parameters, and contextual parameters related to each of the one or more issues **103.** The semantic parameters may indicate one or more keywords and key phrases in description of the one or more problem statements **104.** The temporal parameters may indicate time in which an action script was executed and total time taken for completion of execution of the action script. The spatial parameters may indicate type of machine or computing system being used, and details of memory locations in which the action scripts are stored. Similarly, the contextual parameters may indicate set of commands used during execution of the action scripts and other environmental parameters changed during the execution.

In an embodiment, the distance matrix **112** may be used in creation of the one or more clusters of issues **114** based on semantic similarity between the one or more critical features **110.** As an example, the distance matrix **112** may indicate relevance of each of a first set of critical features relative to a second set of critical features. The first set of critical features and the second set of critical features may be associated with the one or more critical features **110.**

In some embodiments, the data **207** may be processed by one or more modules **209** of the issue handling system **101.** In one implementation, the one or more modules **209** may be stored as a part of the processor **203.** In another implementation, the one or more modules **209** may be communicatively coupled to the processor **203** for performing one or more functions of the issue handling system **101.** The modules **209** may include, without limiting to, an issue template generation module **215,** a critical features determination module **217,** a cluster creation module **219,** a correlation map creation module **221** and other modules **223.**

As used herein, the term module refers to an application specific integrated circuit (ASIC), an electronic circuit, a processor (shared, dedicated, or group) and memory that execute one or more software or firmware programs, a combinational logic circuit, and/or other suitable components that provide the described functionality. In an embodiment, the other modules **223** may be used to perform various miscellaneous functionalities of the issue handling system **101.** It will be appreciated that such modules **209** may be represented as a single module or a combination of different modules.

In some embodiments, the issue template generation module **215** may be responsible for generating the one or more issue templates **109** by mapping the problem statements **104** of each of the one or more issues **103** with the corresponding system log information **107.** The issue template generation module **215** uses the problem statements **104** associated with the one or more issues **103** and maps them with the system log information **107** related to the one or more issues **103** to generate the one or more issue templates **109.**

In some embodiments, the critical features determination module **217** may be responsible for determining one or more critical features **110** in each of the one or more issue templates **109** based on one or more Natural Language Processing (NLP) components and predetermined issue parameters **211.** In an embodiment, each problem statement **104** associated with the one or more issues **103** may include a set of sequential action scripts information associated with them. Hence, the one or more issue templates **109** may include a collection of problem statements **104** and the associated action scripts, along with values of each of the predetermined issue parameters **211.** Following is an exemplary representation of the issue template corresponding to a problem statement **104** - "I want to install the drivers for the printer".

```
     Issue template → {
                "problemStatement": "I want to install the drivers for the printer.",
                "actionScriptsMatched": "printerdriver_sys310.msi",
                "criticalFeatures": ['install', 'driver', 'printer'],
                "machineType": "windows pc",
                "printerName": "sys310",
                "location": "T20GB 111"
           }
```

In the above example, the problem statement **104** - "I want to install the drivers for the printer" may be directly received from the user through the user interface. Further, one or more key features and nature of the issue may be determined by analyzing description of the problem statement **104** using the NLP components. The action scripts associated with the problem statement **104** may be retrieved in real-time from the system log information **107** which is stored in the system logger **106.** In the above example, the parameter - "actionScriptsMatched" may be a part of the system log information **107,** and indicates the actual issue which has caused a problem in the computing environment **100.**

In some embodiments, upon receiving the problem statement **104** and identifying the corresponding system log information **107,** the critical features determination module **217** may determine the one or more critical features **110** in the issue template. In the above example, the critical features determination module **217** may determine the critical features **110** such as, 'install', 'driver', 'printer', which indicate that the determined issue is related to installation of drivers for printers.

In some implementations, the issue template may include additional system log information **107** such as, type of the computing system (Ex.: systems running of Windows operating system), name of the asset having the issues (Ex.: printer), and location details of the asset or the identified issue (Ex.: region of memory having address - 'T20GB 111'). In an embodiment, upon determining and extracting the one or more critical features **110,** the one or more extracted critical features **110** may be classified based on the predetermined parameters in order to build a less sparse value set. For example, the one or more critical features **110** may be classified based on temporal parameters as a long script, a short script, a medium script, and the like. Similarly, the one or more critical features **110** may be classified based on spatial parameters indicating the implementation aspects of the computing system, such as Windows server, Linux server, Local server, and the like.

In some embodiments, the cluster creation module **219** may be responsible for creating the one or more clusters of issues **114** based on the semantic similarity between the one or more critical features **110** and the distance matrix **112** associated with each of the one or more issues **103.** The cluster creation module **219** may use the one or more critical features **110** determined by the critical features determination module **217** and quantify each of the one or more critical features **110** to create the one or more clusters of issues **114.**

As an example, the one or more clusters of issues **114** may include descriptions of the problem statements **104** that are semantically, spatially, temporally, and contextually similar. Also, the one or more clusters of issues **114** may include set of action scripts and system log information **107** that are mapped with the one or more problem statements **104.**

In some embodiments, the correlation map creation module **221** may be responsible for creating the correlation map **116** for handling the one or more issues **103.** As an example, the correlation map **116** of each of the one or more clusters may include a network of connections across the one or more clusters of issues **114** that have similar problem statements **104.** Further, one or more nodes, each node representing one of the one or more clusters of issues **114** in the network, are created and represented as a map of each of the one or more clusters of issues **114.** Later, the correlation map creation module **221** may include a custom distance matrix **112** to each of the one or more clusters of issues **114** to indicate the relative distance among each of the one or more clusters of issues **114** in the correlation map **116.**

Suppose, whenever a new issue is reported in the computing system and/or when the user provides a new problem statement **104** to the issue handling system **101** through the user interface, the issue handling system **101** may process the problem statement **104** to classify intent of the problem statement. Further, the relevant action descriptions are processed and the one or more critical features **110** are determined. Upon determining the one or more critical features **110,** the one or more critical features **110** are further classified to identify a correct cluster to which the one or more critical features **110** belong. Further, a custom distance matrix **112** may be used to traverse the correlation map **116** generated to identify the corresponding issue resolution scripts and associated parameters to run the resolution scripts for the cluster of issues that has been matched. The issue resolution scripts are a set of instructions and actions that may be used for resolving the one or more issues. In some embodiments, the user may be provided with details of the best matched cluster and the issue resolution scripts. In some implementations, the user may be provided an option to select one of the one or more issue resolution scripts provided on the user interface, which are subsequently used to create the correlation map **116.**

Furthermore, a self-learning module in the issue handling system **101** may be used for modifying the one or more clusters and the correlation map **116** based on feedback from the user on the best-match cluster provided to the user. Based on the user feedback, the self-learning module may increase coefficient of mapping between the description of the problem statements **104** and the corresponding issue resolution scripts. Consequently, the user feedbacks would enable creation of more refined clusters of issuers containing very similar problem statements **104** and accurate mapping of issue resolution scripts in the correlation map **116.**

### Exemplary embodiment:

Consider a computing environment **100** having one or more users and one or more computing systems associated with the one or more users. Suppose, the one or more users may face one or more issues **103** with the one or more computing systems while working on the one or more computing systems. Now, to handle and resolve the one or more issues **103** detected, the one or more users may search and/or post each of the one or more issues **103** to the issue handling system **101** through the user interface associated with the issue handling system **101.** For example, the one or more users may input a problem statement **104** corresponding to the one or more issues **103,** as shown in **Table A** below.

Upon receiving the problem statements **104** of each of the one or more issues **103,** the issue handling system **101** extracts system log information **107** related to the one or more issues **103** from a system logger **106** associated with each of the one or more computing systems. Further, the issue handling system **101** applies one or more NLP components on each of the problem statements **104** to identify one or more critical features **110** associated with the problem statements **104.** The one or more critical features **110** are used to create one or more clusters of issues **114.**

As an example, the one or more critical features **110** that may be considered for creating the clusters of issues **114** may include, an NLP intent class identifier feature, an NLP object relative frequency identifier, machine type or type of servers running on each of the one or more computing systems and type of scripts run on each of the one or more computing systems. Referring to Table A below, the intent class identifier features, may include several types of actions performed by the user on the one or more computing systems, which are represented by variables such as, 'Action - 1', 'Action - 2', 'Problem', and 'Req'. The object relative frequency may be a numeric value between 0 to 1. Further, the machine/server type critical features may include several types of servers running on the one or more computing systems, which are represented by variables such as, 'Local', 'Server - 1', and 'Server - 2'. Similarly, nature and type of the scripts may be represented by variables such as 'Run', 'Check', and 'Verify'.

Further, it shall be noted that, the one or more critical features **110** that may be used for creating the one or more clusters of issues **114** are not limited to the one or more critical features **110** indicated in **Table A** and **Table B** below, but may include additional set of critical features as well. Using the additional set of critical features while creating the one or more clusters of issues **114** would further enhance the relativity among the clusters of issues **114,** thereby leading to better association between the problem statements **104** and the corresponding one or more clusters of issues **114.**

The above listed critical features **110** are respectively represented as critical feature **110₁** to critical feature **110₄** in **Table A,** in which, the critical feature **110₁** and critical feature **110₂** are derived from the NLP components and critical feature **110₃** and the critical feature **110₄** are derived from the system log information **107.** In an embodiment, the one or more critical features **110** considered for creating the one or more clusters **114** are not limited to critical feature **110₁** to critical feature **110₄,** but may include other critical features **110** based on numerous factors including type of the issues detected, nature of the computing environment **100** and/or the computing systems.

**Table A - List of Problem statements and associated critical features.**

| **Problem statement 104** | **110₁ Critical feature 1 (NLP: intent class)** | **110₂ Critical feature 2 (NLP: object relative frequency)** | **110₃ Critical feature 3 (System log: Machine type** | **110₄ Critical feature 4 (System log: Script type)** |
|---|---|---|---|---|
| Printer configuration required on my laptop | Action - 1 | 0.7 | Local | Run |
| Browser need to be updated or installed | Action - 1 | 0.65 | Local | Run |
| Need to reset BH application password | Req - 1 | 0.4 | Server - 1 | Verify |
| I want to install chrome browser | Action - 2 | 0.6 | Local | Run |
| Enable network connection through VPN on my pc. | Action - 1 | 0.5 | Local | Check |
| Outlook not loading emails. | Problem | 0.05 | Local | Check |
| Unable to setup skype meetings | Problem | 0.1 | Server - 1 | Verify |
| Repeated account lockout issue. | Problem | 0.05 | Server - 2 | Check |
| Request new login credentials for SF portal for testing. | Action - 2 | 0.15 | Server - 1 | Verify |
| Need to back-up my D-Drive. | Action - 1 | 0.55 | Server - 2 | Run |

Further, based on similarities among each of the one or more critical features, **110₁** to **110₄,** the issue handling system **101** creates one or more clusters **114** of the one or more issues **103.** For example, as indicated in **Table B** below, the problem statements **104** that relate to one or more issues **103** with 'Network Connectivity' in the one or more computing systems may be grouped into a single cluster. Similarly, the one or more issues **103** that relate to a similar type of script - 'Run' script, and being run on a 'Local' server may be grouped to a single cluster **114** - 'Cluster 1'. Based on the above analysis, the issue handling system **101** classifies and groups each of the one or more issues **103** into one or more clusters **114.** As an example, the one or more clusters **114** to which each of the problem statements **104** belong are indicated in 'Cluster No.' **301** column in **Table B** below.

**Table B: Grouping of problem statements into one or more clusters**

| **Problem statement 104** | **110₁ Critical feature 1 (NLP: intent class)** | **110₂ Critical feature 2 (NLP: object relative frequency)** | **110₃ Critical feature 3 (System log: Machine type** | **110₄ Critical feature 4 (System log: Script type)** | **301 Cluster No.** |
|---|---|---|---|---|---|
| Printer configuration required on my laptop | Action - 1 | 0.7 | Local | Run | 1 |
| Browser need to be updated or installed | Action - 1 | 0.65 | Local | Run | 1 |
| Need to reset BH application password | Req - 1 | 0.4 | Server - 1 | Verify | 2 |
| I want to install chrome browser | Action - 2 | 0.6 | Local | Run | 1 |
| Enable network connection through VPN on my pc. | Action - 1 | 0.5 | Local | Check | 2 |
| Outlook not loading emails. | Problem | 0.05 | Local | Check | 3 |
| Unable to setup skype meetings | Problem | 0.1 | Server - 1 | Verify | 2 |
| Repeated account lockout issue. | Problem | 0.05 | Server - 2 | Check | 3 |
| Request new login credentials for SF portal for testing. | Action - 2 | 0.15 | Server - 1 | Verify | 2 |
| Need to back-up my D-Drive. | Action - 1 | 0.55 | Server - 2 | Run | 1 |

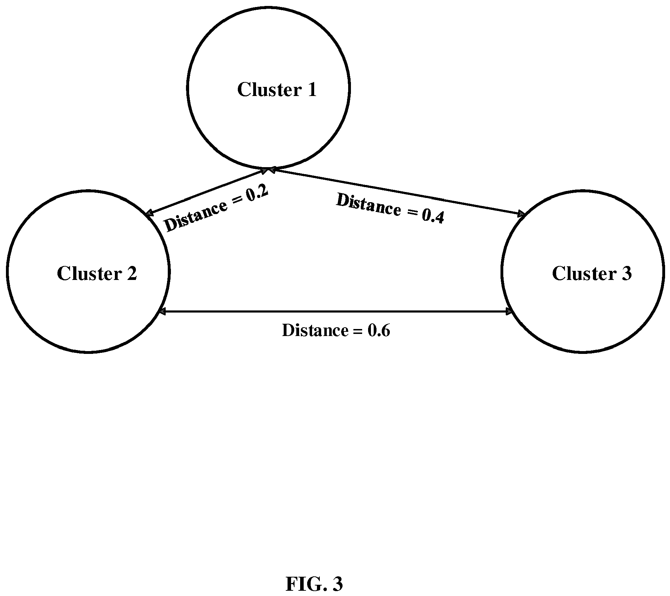

Further, upon creating the one or more clusters **114** of the one or more issues **103,** the issue handling system **101** creates a correlation map **116** of each of the one or more clusters **114.** In an embodiment, the correlation map **116** is created with the help of a custom distance matrix **112** that indicates relevance of the one or more critical features **110** associated with the one or more clusters **114.** In other words, the correlation map **116** is created based on inter-cluster relevance between each of the one or more clusters **114.** The inter-cluster relevance (i.e. distance between each of the one or more clusters **114** i.e. the distance matrix **112**) is determined by applying a clustering algorithm such as, K-means clustering algorithm on each of the one or more clusters **114.** **FIG. 3** indicates inter-cluster relevance between the three clusters, 'Cluster 1', 'Cluster 1', and 'Cluster 1', which represents the relevance among each of the clusters - Cluster 1 to 3.

In the above example, the distance between 'Cluster 1' and 'Cluster 2' is 0.2 units, and the distance between the cluster 'Cluster 1' and 'Cluster 3' is 0.4 units. This indicates that, the relevance between 'Cluster 1' and 'Cluster 2' is more than the relevance between 'Cluster 1' and 'Cluster 3'. In other words, it may be concluded that, the issues **103** in 'Cluster 1' are closely related to the issues **103** belonging to 'Cluster 2', as compared to the issues **103** belonging to 'Cluster 3'. Similarly, based on mutual distance between 'Cluster 1', 'Cluster 2' and 'Cluster 3', it may be observed that, the relevance between 'Cluster 3' and 'Cluster 1' is higher than the relevance between 'Cluster 3' and 'Cluster 2'. Which means that, the issue **103** belonging to 'Cluster 3' are more closely related to issues **103** belonging to 'Cluster 1', as compared to the issues **103** in 'Cluster 2'.

In an embodiment, whenever the one or more users experience a new issue **103** in the one or more computing systems, the users may report the detected issue **103** or the problem statements **104** of the detected issue **103** to the issue handling system **101** through the user interface. The issue handling system **101** may determine one or more critical features **110** of the detected issue **103** based on relevant system log information **103** and NLP analysis of the problem statements **104.** The one or more critical features **110** may be classified and grouped into clusters **114.** Further, the already generated correlation map **116** may be traversed using the distance matrix **112** to identify one or more issue resolution scripts and associated parameters required for resolving the detected issue **103.** Later, the user may be provided with details of the issue resolution scripts and associated parameters through the user interface, thereby facilitating the users to resolve the detected issue **103.**

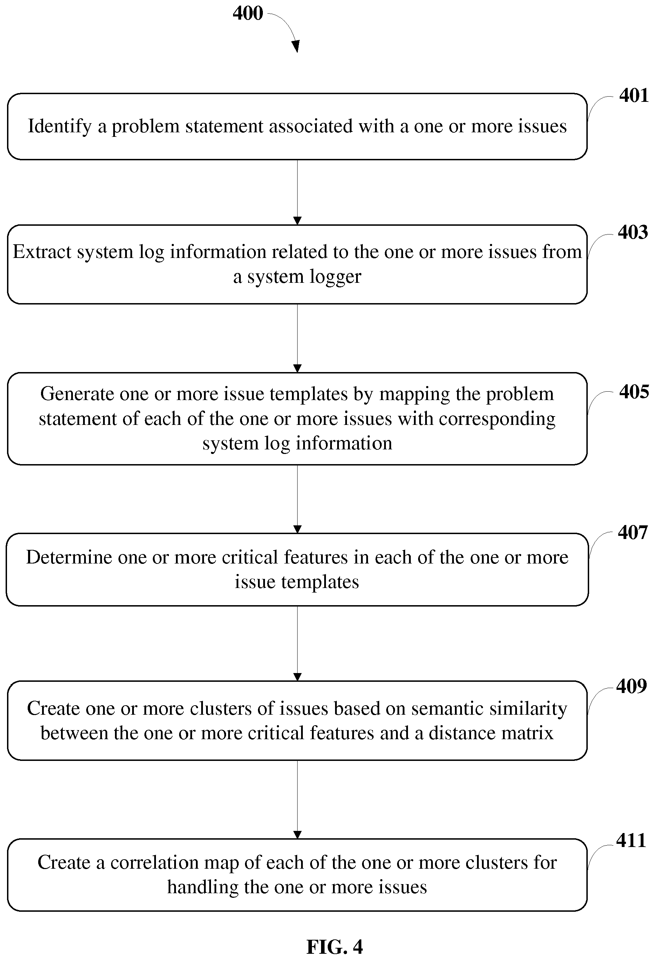

**FIG. 4** shows a flowchart illustrating a method for handling one or more issues **103** in a computing environment **100** in accordance with some embodiments of the present disclosure.

As illustrated in **FIG. 4****,** the method **400** includes one or more blocks illustrating a method for handling the one or more issues **103** in the computing environment **100** using an issue handling system **101,** for example the issue handling system **101** of **FIG. 1****.** The method **400** may be described in the general context of computer executable instructions. Generally, computer executable instructions can include routines, programs, objects, components, data structures, procedures, modules, and functions, which perform specific functions or implement specific abstract data types.

The order in which the method **400** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block **401,** method **400** comprises identifying, by issue handling system **101,** a problem statement **104** associated with one or more issues **103** from one or more tickets. In an embodiment, the one or more tickets may be extracted from a ticketing system associated with the computing environment **100.** As an example, the ticketing system may be an issue tracking system (also referred as trouble ticket system, support ticket, request management or incident ticket system), which may manage and maintain lists of issues, as needed by an organization.

At block **403,** method **400** comprises extracting, by the issue handling system **101,** system log information **107** related to the one or more issues **103** from a system logger **106** associated with the computing environment **100.** As an example, the system log information **107** may include, without limiting to, at least one of details related to an action causing the one or more issues **103,** timestamp of one or more commands run corresponding to the action, state of one or more environmental variables during the execution of the action and the action scripts run in the computing environment **100.**

At block **405,** method **400** comprises generating, by the issue handling system **101,** one or more issue templates **109** by mapping the problem statement **104** of each of the one or more issues **103** with corresponding system log information **107.** In some implementations, each problem statement **104** would have a set of sequential action scripts information associated with them, and would be used for mapping with the corresponding one or more issues **103.**

At block **407,** method **400** comprises determining, by the issue handling system **101,** one or more critical features **110** in each of the one or more issue templates **109** based on one or more Natural Language Processing (NLP) components and predetermined issue parameters **211.** As an example, the one or more NLP components may include at least one of dependency graph analysis, syntax tree analysis, semantic role labelling and associated rules of the NLP. Also, the one or more predetermined issue parameters **211** may include, without limiting to, semantic parameters, temporal parameters, spatial parameters, and contextual parameters related to each of the one or more issues **103.**

At block **409,** method **400** comprises creating, by the issue handling system **101,** one or more clusters of issues **114** based on semantic similarity between the one or more critical features **110** and a distance matrix **112** associated with each of the one or more issues **103.** As an example, the distance matrix **112** may indicate relevance of each of a first set of critical features **110** relative to a second set of critical features **110.** In an embodiment, the first set of critical features **110** and the second set of critical features **110** may be associated with the one or more critical features **110.**

At block **411,** method **400** comprises creating, by the issue handling system **101,** a correlation map **116** of each of the one or more clusters for handling the one or more issues **103.** The correlation map **116** of each of the one or more clusters may include a network of connections across the one or more clusters of issues **114** that have similar problem statements **104.** Initially, the issue handling system **101** may create a map of each of the one or more clusters of issues **114** using the network of connections. Later, the issue handling system **101** may include a custom distance matrix **112** to each of the one or more clusters of issues **114** to indicate the relative distance among each of the one or more clusters of issues **114** in the correlation map **116.**

In an embodiment, handling the one or more issues **103** further comprises receiving the one or more problem statements **104** related to the one or more issues **103** from a user associated with the computing environment **100** through a user interface associated with the issue handling system **101.** Further, a best-match cluster may be identified among the one or more clusters for handling the one or more issues **103** based on similarity of the one or more problem statements **104** with the one or more critical features **110** in the one or more clusters. Finally, the issue handling system **101** may provide the identified best-match cluster to the user through the user interface. In an embodiment, the best-match cluster may include one or more issue resolution scripts corresponding to the one or more problem statements **104.** In some embodiments, the one or more clusters may be modified based on user feedback on the best-match cluster.

### Computer System

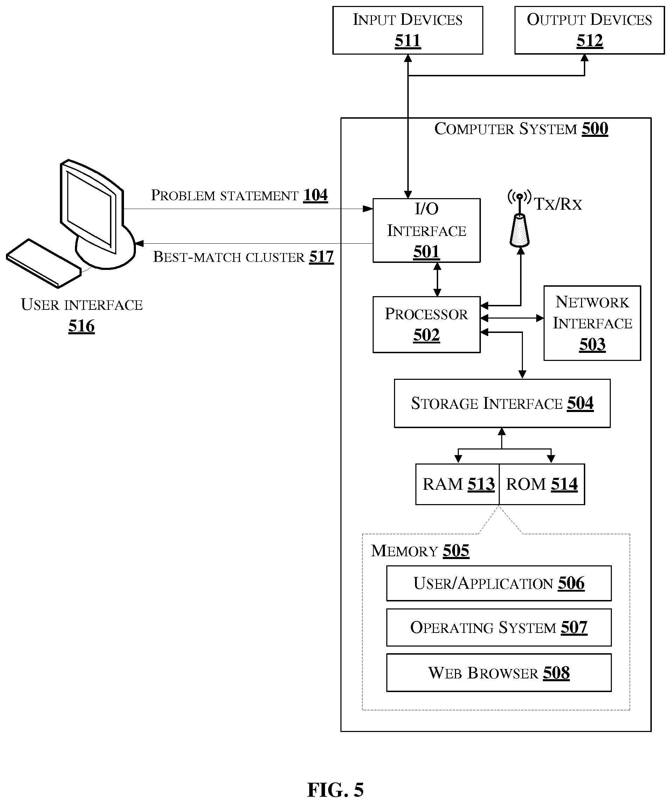

**FIG. 5** illustrates a block diagram of an exemplary computer system **500** for implementing embodiments consistent with the present disclosure. In an embodiment, the computer system **500** may be the issue handling system **101** which is used for handling one or more issues **103** in a computing environment **100.** The computer system **500** may include a central processing unit ("CPU" or "processor") **502.** The processor **502** may comprise at least one data processor for executing program components for executing user- or system-generated business processes. A user may include a person, a person using a device in the computing environment **100,** or such a device itself. The processor **502** may include specialized processing units such as integrated system (bus) controllers, memory management control units, floating point units, graphics processing units, digital signal processing units, etc.

The processor **502** may be disposed in communication with one or more input/output (I/O) devices (**511** and **512**) via I/O interface **501.** The I/O interface **501** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE) or the like), etc. Using the I/O interface **501,** the computer system **500** may communicate with one or more I/O devices (**511** and **512**).

In some implementations, the I/O interface **501** may be used to connect to a user interface **516** associated with a user. The user interface **516** may be used to receive one or more problem statements **104** related to the one or more issues **103** from a user associated with the computing environment **100.** Further, the user interface **516** may be used to provide a best-match cluster **517** to the user. In an embodiment, the best-match cluster **517** may include one or more issue resolution scripts corresponding to the one or more problem statements **104.** Using the one or more issue resolution scripts, the user may resolve the one or more issues **103** in the computing environment **100.** The network interface **503** may employ connection protocols including, without limitation, direct connect, Ethernet (e.g., twisted pair 10/**100**/**100**0 Base T), Transmission Control Protocol/Internet Protocol (TCP/IP), token ring, IEEE 802.11 a/b/g/n/x, etc.

In some embodiments, the processor **502** may be disposed in communication with a memory **505** (e.g., RAM **513,** ROM **514,** etc. as shown in **FIG. 5**) via a storage interface **504.** The storage interface **504** may connect to memory **505** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **505** may store a collection of program or database components, including, without limitation, user/application **506,** an operating system **507,** a web browser **508,** and the like. In some embodiments, computer system **500** may store user/application data **506,** such as the data, variables, records, etc. as described in this invention. Such databases may be implemented as fault-tolerant, relational, scalable, secure databases such as Oracle or Sybase.

The operating system **507** may facilitate resource management and operation of the computer system **500.** Examples of operating systems include, without limitation, Apple Macintosh OS X, UNIX, Unix-like system distributions (e.g., Berkeley Software Distribution (BSD), FreeBSD, Net BSD, Open BSD, etc.), Linux distributions (e.g., Red Hat, Ubuntu, K-Ubuntu, etc.), International Business Machines (IBM) OS/2, Microsoft Windows (XP, Vista/7/8, etc.), Apple iOS, Google Android, Blackberry Operating System (OS), or the like. A user interface may facilitate display, execution, interaction, manipulation, or operation of program components through textual or graphical facilities. For example, user interfaces may provide computer interaction interface elements on a display system operatively connected to the computer system **500,** such as cursors, icons, check boxes, menus, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, JavaScript, AJAX, HTML, Adobe Flash, etc.), or the like.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

Advantages of embodiments of the present disclosure are described in the following paragraphs.

In an embodiment, the present disclosure discloses a method for handling one or more issues arising in one or more assets of a computing environment.

In an embodiment, the method of the present disclosure facilitates automated mapping of an issue or its problem statement to an action script using natural language analysis of the one or more problem statements, action scripts and system log information, thereby eliminating manual intervention required for handling the one or more issues.

In an embodiment, the method of the present disclosure is capable of self-learning and helps in automatically mapping a new issue with an appropriate problem statement and the action script.

In an embodiment, the method of present disclosure uses a virtual user interface to receive one or more problem statements from a user and to provide one or more issue resolution scripts corresponding to the one or more problem statements to the user, thereby assisting the user in handling of the one or more issues.

In an embodiment, the issue handling system disclosed in the present disclosure may be used by a system engineer or a software test engineer as a real-time assist tool for handling the one or more issues in the computing environment.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise.

The terms "a", "an" and "the" mean "one or more", unless expressly specified otherwise. A description of an embodiment with several components in communication with each other does not imply that all such components are required. On the contrary, a variety of optional components are described to illustrate the wide variety of possible embodiments of the invention.

When a single device or article is described herein, it will be clear that more than one device/article (whether they cooperate) may be used in place of a single device/article. Similarly, where more than one device or article is described herein (whether they cooperate), it will be clear that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for handling one or more issues (103) in a computing environment (100), the method comprising:
identifying, by an issue handling system (101), a problem statement (104) associated with the one or more issues (103) from one or more tickets;
extracting, by the issue handling system (101), system log information (107), related to the one or more issues (103), from a system logger (106) associated with the computing environment (100);
generating, by the issue handling system (101), one or more issue templates (109) by mapping the problem statement (104) of each of the one or more issues (103) with corresponding system log information (107);
determining, by the issue handling system (101), one or more critical features (110) in each of the one or more issue templates (109) based on one or more Natural Language Processing components and predetermined issue parameters (211);
creating, by the issue handling system (101), one or more clusters of issues (114) based on semantic similarity between the one or more critical features (110) and a distance matrix (112) associated with each of the one or more issues (103); and
creating, by the issue handling system (101), a correlation map (116) of each of the one or more clusters for handling the one or more issues (103).

2. The method as claimed in claim 1, wherein the one or more tickets are extracted from a ticketing system associated with the computing environment (100).

3. The method as claimed in claim 1 or claim 2, wherein the system log information (107) comprises at least one of details related to an action causing the one or more issues (103), a timestamp of one or more commands run corresponding to the action, a state of one or more environmental variables during the execution of the action and an action script run in the computing environment (100).

4. The method as claimed in any of the preceding claims, wherein the one or more predetermined issue parameters (211) comprises at least one of semantic parameters, temporal parameters, spatial parameters, and contextual parameters related to each of the one or more issues (103).

5. The method as claimed in any of the preceding claims, wherein the Natural Language Processing components comprise at least one of dependency graph analysis, syntax tree analysis, semantic role labelling and associated rules of the Natural Language Processing.

6. The method as claimed in any of the preceding claims, wherein the distance matrix (112) indicates relevance of each of a first set of critical features relative to a second set of critical features, wherein the first set of critical features and the second set of critical features are associated with the one or more critical features (110).

7. The method as claimed in any of the preceding claims, wherein handling the one or more issues (103) further comprises:
receiving, by the issue handling system (101), the one or more problem statements (104) related to the one or more issues (103) from a user associated with the computing environment (100) through a user interface (516) associated with the issue handling system (101);
identifying, by the issue handling system (101), a best-match cluster (517), among the one or more clusters, for handling the one or more issues (103), based on similarity of the one or more problem statements (104) with the one or more critical features (110) in the one or more clusters; and
providing, by the issue handling system (101), the identified best-match cluster (517) to the user through the user interface (516), wherein the best-match cluster (517) comprises one or more issue resolution scripts corresponding to the one or more problem statements (104).

8. The method as claimed in claim 7, further comprising modifying the one or more clusters based on feedback from the user on the best-match cluster (517).

9. An issue handling system (101) for handling one or more issues (103) in a computing environment (100), the issue handling system (101) comprises:
a processor; and
a memory communicatively coupled to the processor, wherein the memory stores processor-executable instructions, which, on execution, causes the issue handling system to perform the method of any of the preceding claims.

10. A computer readable medium including instructions stored thereon that when processed by a computer, causes the computer to perform the method of any of claims 1 to 8.

11. A computer program product comprising instructions that, when executed by a computer, cause the computer to perform the method of any of claims 1 to 8.
